# FASCICULE DE BREVET EUROPEEN

(11) **EP 0 945 294 B1**
(45) Date de publication et mention de la délivrance du brevet: **04.01.2006**
(21) Numéro de dépôt: 99400741.7
(22) Date de dépôt: 26.03.1999
(51) Int. Cl.: B60J 5/04, B62D 25/04

(54) **Structure de carrosserie pour véhicule automobile**
Fahrzeugaufbaukonstruktion
Body structure for vehicle

(30) Priorité: 27.03.1998 FR 9803803
(43) Date de publication de la demande: 29.09.1999
(73) Titulaire: Renault s.a.s., 92100 Boulogne Billancourt (FR)
(72) Inventeur: Curbilie, Pascal, 95250 Beauchamp (FR); Mounie, Michel, 78490 Bazoches (FR)

(56) Documents cités:
- EP-A- 0 754 582
- DE-A- 2 411 865
- FR-A- 2 212 246
- FR-A- 2 372 067
- FR-A- 2 739 596
- FR-A- 2 745 241

## Description

La présente invention se rapporte à une structure de carrosserie pour véhicule automobile destinée à limiter les déplacements latéraux d'une porte lors d'un choc et en particulier lors d'un choc frontal d'une grande intensité entraînant une déformation du montant sur lequel est articulée la porte.

Classiquement, les véhicules automobiles sont dotés d'un bloc avant à déformation programmée destiné à absorber le maximum d'énergie créé par la collision d'un véhicule contre un obstacle, en particulier en choc frontal ou en choc avant oblique et l'habitacle du véhicule est muni d'une structure rigide, peu déformable, pour protéger les occupants. En particulier, les portes du véhicule sont munies de renforts de protection prenant appui sur les montants avant de la porte et destinés à réduire les risques d'intrusion en cas de choc latéral et à augmenter la rigidité de l'habitacle en cas de choc frontal.

Toutefois, lors d'un choc violent contre un obstacle, et en particulier dans les chocs décalés et inclinés, la déformation du bloc avant du véhicule n'étant pas suffisante pour absorber toute l'énergie cinétique du choc, celle-ci est suivie d'une déformation de l'habitacle en particulier du pied avant et du montant de baie. Or, on constate généralement, suite au choc, un déplacement latéral de la porte avant et un mouvement de torsion du pied avant qui conduisent à un décalage de l'extrémité du renfort de protection vis à vis du pied avant et donc à l'inefficacité du renfort de protection de porte dans l'absorption de l'énergie du choc avant. Par ailleurs, le pied avant du véhicule supportant le plus souvent la planche de bord, le mouvement de torsion d'un des pieds avant conduit à une déformation de la planche de bord qui s'arc-boute entre les deux montants et provoque ainsi un mouvement d'intrusion de la planche de bord à travers l'habitacle.

Il est connu de la publication FR-A-2.212.246 d'utiliser un organe rigide rapporté sur la porte et pénétrant à travers le pied avant pour lier ce dernier à la porte et limiter ainsi le déplacement transversal de la porte et mieux faire participer la porte dans l'absorption de l'énergie du choc.

Toutefois, un tel dispositif, en nécessitant la fixation d'un organe rigide complémentaire sur la porte ou sur le pied avant, est assez complexe à mettre en oeuvre et n'empêche pas la torsion du pied avant et donc l'arc-boutement de la planche de bord lorsque celle-ci est fixée latéralement au pied avant.
Une structure de carrosserie comportant les caractéristiques du préambule de la revendication 1 est connu de FR-A-2 745 241.

L'objet de la présente invention est donc de proposer une nouvelle structure de carrosserie qui optimise la rigidité de la structure de l'habitacle et qui permette également de réduire l'encombrement du montant dans l'habitacle pour offrir un espace supplémentaire pour la planche de bord et qui soit simple et économique à réaliser.

La structure de carrosserie pour véhicule automobile selon l'invention comporte une porte articulée sur un montant de carrosserie et munie d'un panneau intérieur équipé d'un renfort de protection, le renfort de protection comportant une extrémité venant en regard du montant lorsque la porte est en position fermée, le montant étant constitué par l'assemblage d'au moins deux tôles soudées.

Selon l'invention, la structure de carrosserie est caractérisée en ce que le montant comporte une feuillure de soudage faisant face au panneau intérieur de la porte au niveau d'une paroi latérale localisée entre le renfort de protection et le panneau extérieur, de façon à ce que, lors d'un choc frontal du véhicule, le bord de la feuillure heurte et déforme la paroi latérale et empêche le déplacement latéral de la porte.

Selon une autre caractéristique de l'invention, la feuillure relie les deux tôles sur la hauteur du montant pour former une face arrière disposée sensiblement perpendiculairement à l'axe du véhicule, la feuillure faisant saillie à l'extérieur du montant, perpendiculairement à la face arrière.

Selon une autre caractéristique de l'invention, le montant est un pied avant de véhicule automobile qui supporte également une planche de bord, la planche de bord étant munie de pattes de fixation fixées sur la face arrière du pied avant au moyen d'éléments de fixation disposés dans l'axe du renfort de protection lorsque l'ouvrant est en position fermée, la feuillure de soudage étant décalée latéralement vers l'extérieur du véhicule par rapport à l'extrémité des pattes de fixation.

Selon une autre caractéristique de l'invention, la face arrière présente des trous taraudés destinés à recevoir les vis de fixation de la planche de bord.

Selon une autre caractéristique de l'invention, le montant possède une section de forme sensiblement trapézoïdale réalisée par le soudage de deux tôles embouties, le montant présentant une première feuillure de soudage à proximité de l'intersection de la face arrière et de la face latérale extérieure du montant et une seconde feuillure à proximité de l'intersection de la face avant et de la face latérale intérieure du montant.

Selon une autre caractéristique de l'invention, la feuillure supporte une garniture d'étanchéité venant prendre appui latéralement contre le panneau intérieur de porte.

Selon une autre caractéristique de l'invention, le renfort de protection est fixé à l'intérieur du panneau intérieur de porte.

Selon une autre caractéristique de l'invention, le renfort de protection est rapporté sur l'extérieur du panneau intérieur de porte et est recouvert d'un panneau de garniture.

On comprendra mieux les buts, aspects et avantages de la présente invention, d'après la description donnée ci-après de différents modes de réalisation de l'invention, présentés à titre d'exemple non limitatif, en se référant aux dessins annexés, dans lesquels :
- la figure 1 est une vue en perspective d'un côté de véhicule automobile équipé d'une structure de carrosserie selon l'invention,
- la figure 2 représente une section transversale au niveau du renfort de protection d'une porte avant et du pied avant d'une structure de carrosserie selon l'invention,
- la figure 3 présente une variante de réalisation de la structure de carrosserie selon l'invention.

Pour faciliter la lecture du dessin, seuls les éléments nécessaires à la compréhension de l'invention ont été représentés.

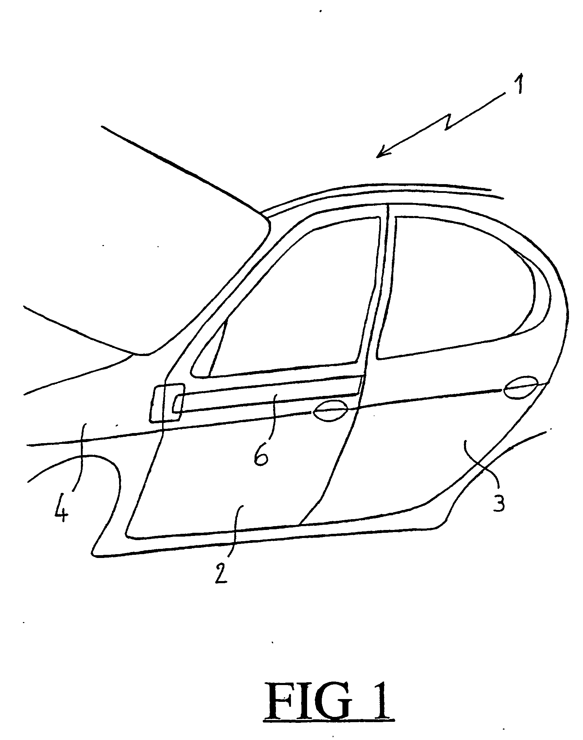

La figure 1 représente un véhicule automobile 1 comprenant un bloc avant 4 à déformation programmée et des portes latérales 2 et 3 articulées respectivement sur un pied avant 5 et un pied milieu du véhicule. La porte avant 2 est équipée d'un renfort de protection 6 s'étendant sensiblement horizontalement, approximativement à hauteur de la charnière supérieure de la porte, depuis le pied avant 5 jusqu'au pied milieu du véhicule et destiné à coopérer, lors d'un choc frontal, avec la structure de carrosserie pour absorber l'énergie du choc.

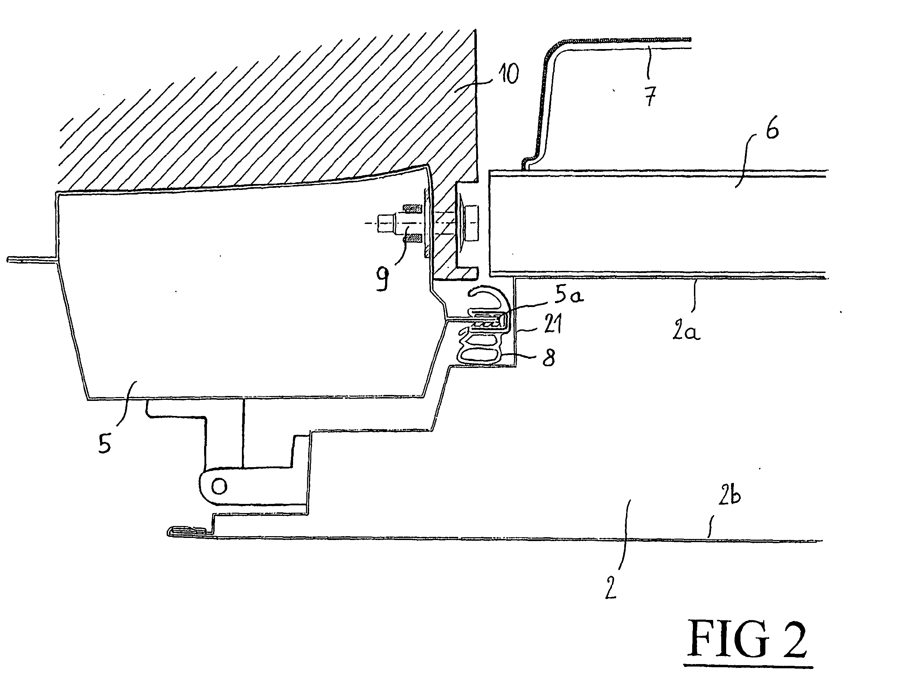

Cette structure de carrosserie, représentée sur la figure 2 selon un premier mode de réalisation de l'invention, comporte un pied avant 5, de section sensiblement trapézoïdale, formé par l'assemblage de deux tôles embouties et une porte 2 munie d'un panneau intérieur 2a et d'un panneau extérieur 2b. Le panneau intérieur 2a supporte sur sa face extérieure le renfort de protection 6, ce dernier étant recouvert d'un panneau de garniture 7 venant recouvrir également le panneau intérieur 2a.

Le pied avant 5 comporte une feuillure 5a de soudage orientée vers l'arrière du véhicule 1 et reliant les bords arrières des deux tôles embouties. Cette feuillure 5a de quelques centimètres de largeur, disposée sur la face arrière 5b du pied avant 5, s'étend sensiblement verticalement sur toute la hauteur du pied 5 et comporte, à hauteur du renfort de protection 6, un bord venant à proximité immédiate d'une paroi latérale 21 du panneau intérieur de porte 2a, la paroi latérale 21 étant disposée perpendiculairement à la feuillure 5a lorsque la porte 2 est en position fermée. La feuillure 5 est localisée à proximité du bord extérieur de la face arrière 5b du pied avant 5 de façon à faire face à la porte 2 en étant légèrement décalée vers le panneau extérieur 2b de la porte 2 par rapport au renfort de protection 6.

Une garniture d'étanchéité 8 est montée sur la feuillure 5a et vient prendre appui latéralement contre un retour longitudinal du panneau intérieur 2a, lorsque la porte 2 est en position fermée, de façon à assurer l'étanchéité de l'habitacle.

Le pied avant 5 comporte également un élément de fixation 9 disposé juste en regard du renfort de protection 6 de la porte 2 lorsque cette dernière est en position fermée et destiné à maintenir une planche de bord 10. Cette fixation 9 de la planche de bord 10 rapportée sur la face arrière 5b du pied avant 5, permise par la position décalée de la feuillure 5a de soudage vers l'extérieur du pied avant 5, facilite le montage de la planche de bord 10 par son excellente accessibilité et permet également d'optimiser le volume de rangement de la planche de bord 10 en permettant l'extension de la planche de bord jusqu'au bord intérieur du pied avant 5.

Lorsque le véhicule subit un choc violent contre un obstacle, en particulier un choc frontal, le bloc avant 4 du véhicule subit une déformation programmée afin d'absorber une partie de l'énergie cinétique du choc. Dans le cas ou toute l'énergie cinétique n'est pas absorbée par le bloc avant 4 la déformation se propage dans d'autres parties de la structure du véhicule 1. En particulier, la déformation du bloc avant est suivie d'un déplacement et d'une déformation du pied avant 5 qui provoque le déplacement en translation de la feuillure 5a.

La feuillure 5a vient alors heurter la paroi 21 du panneau intérieur 2a de porte 2. L'épaisseur de la feuillure 5a d'un pied avant 5 étant classiquement de l'ordre de 3 mm et l'épaisseur d'un panneau intérieur 2a de porte 2 étant de l'ordre de 0.7 mm, il s'ensuit une déformation de la paroi 21 du panneau intérieur 2a, voire la pénétration de la feuillure 5a à l'intérieur du panneau intérieur 21, qui limite alors le déplacement latéral de la porte 2 vers l'extérieur du véhicule 1 par le blocage latéral du renfort de protection 6 contre la feuillure 5a.

La poursuite du mouvement de translation du pied avant 5 provoque ensuite la mise en contact de la face arrière 5b du pied avant 5 avec le renfort de protection 6 qui transmet les efforts au pied milieu formant ainsi un ensemble rigide participant à l'absorption de l'énergie du choc.

Une telle structure de carrosserie permet donc de limiter de façon importante la déformation de l'habitacle en cas de collision frontale en faisant travailler de façon optimum les renforts de protection des portes et ce sans l'ajout d'organe supplémentaire sur la porte 2 ou le pied avant 5.

Cette structure permet également de limiter la torsion du pied avant 5, générateur d'une déformation de la planche de bord 10 préjudiciable à la sécurité dans l'habitacle, en rendant sensiblement coaxiales les forces appliquées sur le pied avant 5 générées par le choc telles que la poussée du bloc avant 4, la réaction du renfort de protection 6 et la réaction de la planche de bord 10.

La structure de carrosserie précédemment décrite présente également l'avantage d'améliorer l'ergonomie de montage et le volume de la planche de bord 10 en permettant la fixation de cette dernière sur la face arrière 5b du pied avant 5 grâce à la position décalée de la feuillure 5a de la face arrière 5b vers la face extérieure du pied avant 5.

Par ailleurs, le montage du renfort de protection 6 sur l'extérieur du panneau intérieur 21 permet de réaliser un panneau intérieur 21 de faible profondeur, ce qui permet de réduire le nombre de phases d'emboutissage nécessaires à l'obtention de ce panneau intérieur 21 et donc le coût de fabrication de la porte 2, le volume compris entre le panneau intérieur 21 et le panneau extérieur de la porte 2 étant toujours suffisant pour intégrer les différents mécanismes de fermeture ou de lève-vitre dont la porte est habituellement munie.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

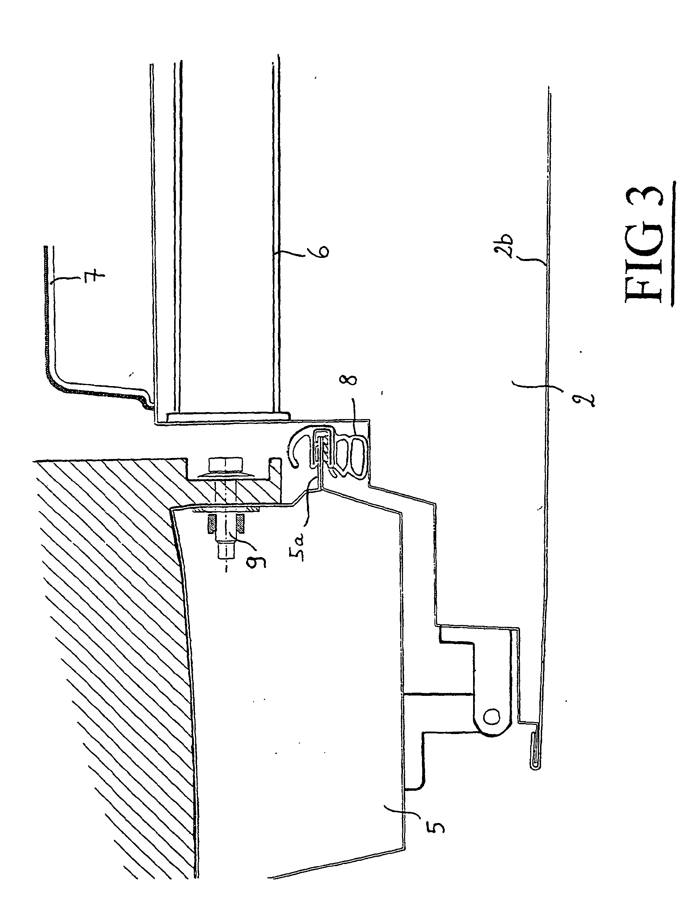

Ainsi, comme on peut le voir sur la figure 3, l'invention peut également être appliquée avec une structure de porte classique dans laquelle le renfort de protection 6 est monté à l'intérieur du panneau intérieur 21 de porte 2, ce dernier présentant alors une profondeur plus importante. Les avantages, en cas de choc frontal, procurés par cette structure de carrosserie sont similaires à ceux décrits précédemment.

Ainsi, la structure de carrosserie selon l'invention est avantageusement applicable au pied avant d'un véhicule automobile mais peut également être appliquée aux portes arrière et pieds milieu d'un véhicule automobile.

## Revendications

1. Structure de carrosserie pour véhicule automobile (1) comportant une porte (2) articulée sur un montant de carrosserie (5) et munie d'un panneau intérieur (2a) équipé d'un renfort de protection (6), ledit renfort de protection (6) comportant une extrémité venant en regard du montant (5) lorsque la porte (2) est en position fermée, ledit montant (5) étant constitué par l'assemblage d'au moins deux tôles soudées, **caractérisée en ce que** ledit montant (5) comporte une feuillure de soudage (5a) faisant face au panneau intérieur (2a) de la porte (2) au niveau d'une paroi latérale (21) localisée entre le renfort de protection (6) et le panneau extérieur (26). de façon à ce que, lors d'un choc frontal du véhicule, le bord de la feuillure (5a) heurte et déforme ladite paroi latérale (21) et empêche le déplacement latéral de la porte (2).

2. Structure de carrosserie selon la revendication 1, **caractérisée en ce que** ladite feuillure (5a) relie les deux tôles sur la hauteur du montant (5) pour former une face arrière (5b) disposée sensiblement perpendiculairement à l'axe du véhicule, ladite feuillure (5a) faisant saillie à l'extérieur du montant (5) et perpendiculairement à ladite face arrière (5b).

3. Structure de carrosserie selon la revendication 2, **caractérisée en ce que** ledit montant est un pied avant (5) de véhicule automobile qui supporte également une planche de bord (10), ladite planche de bord (10) étant munie de pattes de fixation fixées sur la face arrière (5b) dudit pied avant (5) au moyen d'éléments de fixation (9) disposés dans l'axe du renfort de protection (6) lorsque la porte avant (2) est en position fermée, ladite feuillure de soudage (5a) étant décalée latéralement vers l'extérieur du véhicule par rapport à l'extrémité des pattes de fixation.

4. Structure de carrosserie selon la revendication 3, **caractérisée en ce que** ladite face arrière (5b) présente des trous taraudés destinés à recevoir les vis de fixation (9) de la planche de bord (10).

5. Structure de carrosserie selon l'une quelconque des revendications 1 à 4, **caractérisée en ce que** ledit montant (5) possède une section de forme sensiblement trapézoïdale réalisée par le soudage de deux tôles embouties, ledit montant présentant une première feuillure de soudage (5a) à proximité de l'intersection de la face arrière (5b) et de la face latérale extérieure du montant et une seconde feuillure à proximité de l'intersection de la face avant et de la face latérale intérieure du montant.

6. Structure de carrosserie selon l'une quelconque des revendications 1 à 5, **caractérisée en ce** ladite feuillure (5a) supporte une garniture d'étanchéité (8) venant prendre appui latéralement contre le panneau intérieur (21) de la porte (2).

7. Structure de carrosserie selon l'une quelconque des revendications 1 à 6, **caractérisée en ce que** le renfort de protection (6) est fixé à l'intérieur du panneau intérieur (2a) de la porte (2).

8. Structure de carrosserie selon l'une quelconque des revendications 1 à 6, **caractérisée en ce que** le renfort de protection (6) est rapporté sur l'extérieur du panneau intérieur de porte (2a) et est recouvert d'un panneau de garniture (7).

## Patentansprüche

1. Karosserieaufbau für ein Kraftfahrzeug (1), aufweisend eine Tür (2), die an einer Karosseriesäule (5) angelenkt ist und mit einer inneren Platte (2a) versehen ist, welche mit einer Schutzverstärkung (6) ausgestattet ist, wobei die Schutzverstärkung (6) ein Ende aufweist, welches der Säule (5) gegenüberliegt, wenn die Tür (2) in geschlossener Stellung ist, wobei die Säule (5) durch Zusammenfügen von mindestens zwei geschweißten Blechen gebildet ist, **dadurch gekennzeichnet, dass** die Säule (5) einen Schweißfalz (5a) aufweist, welcher der inneren Platte (2a) der Tür (2) auf Höhe einer seitlichen Wand (21) gegenüberliegt, die zwischen der Schutzverstärkung (6) und der äußeren Platte (2b) derart angeordnet ist, dass bei einem frontalen Aufprall des Fahrzeuges der Rand des Falzes (5a) gegen die seitliche Wand (21) stößt und die seitliche Wand (21) verformt und die seitliche Verschiebung der Tür (2) verhindert.

2. Karosserieaufbau nach Anspruch 1, **dadurch gekennzeichnet, dass** der Falz (5a) die zwei Bleche auf der Höhe der Säule (5) verbindet, um eine hintere Fläche (5b) zu bilden, welche im Wesentlichen senkrecht zur Achse des Fahrzeuges angeordnet ist, wobei der Falz (5a) nach außen von der Säule (5) und senkrecht zu der hinteren Fläche (5b) vorragt.

3. Karosserieaufbau nach Anspruch 2, **dadurch gekennzeichnet, dass** die Säule ein vorderer Fuß (5) des Kraftfahrzeugs ist, welcher ebenso ein Instrumentenbrett (10) trägt, wobei das Instrumentenbrett (10) mit Befestigungseisen ausgestattet ist, die an der hinteren Fläche (5b) des vorderen Fußes (5) mittels Befestigungselementen (9) befestigt sind, welche in der Achse der Schutzverstärkung (6) angeordnet sind, wenn die Vordertür (2) in geschlossener Stellung ist, wobei der Schweißfalz (5a) seitlich in Richtung nach außen des Fahrzeuges im Verhältnis zum Ende der Befestigungseisen versetzt ist.

4. Karosserieaufbau nach Anspruch 3, **dadurch gekennzeichnet, dass** die hintere Fläche (5b) mit Innengewinde versehene Löcher aufweist, die dafür bestimmt sind, die Befestigungsschrauben (9) des Instrumentenbretts (10) aufzunehmen.

5. Karosserieaufbau nach irgendeinem der Ansprüche 1 bis 4, **dadurch gekennzeichnet, dass** die Säule (5) einen Querschnitt einer im Wesentlichen trapezähnlichen Form aufweist, welcher durch Verschweißung von zwei tiefgezogenen Blechen realisiert ist, wobei die Säule einen ersten Schweißfalz (5a) in der Nähe der Schnittlinie der hinteren Fläche (5b) und der seitlichen äußeren Fläche der Säule aufweist und einen zweiten Falz in der Nähe der Schnittlinie der vorderen Fläche und der seitlichen inneren Fläche der Säule.

6. Karosserieaufbau nach irgendeinem der Ansprüche 1 bis 5, **dadurch gekennzeichnet, dass** der Falz (5a) eine Dichtung (8) trägt, die seitlich gegen die innere Platte (21) der Tür (2) anstößt.

7. Karosserieaufbau nach irgendeinem der Ansprüche 1 bis 6, **dadurch gekennzeichnet, dass** die Schutzverstärkung (6) im Inneren der inneren Platte (2a) der Tür (2) befestigt ist.

8. Karosserieaufbau nach irgendeinem der Ansprüche 1 bis 6, **dadurch gekennzeichnet, dass** die Schutzverstärkung (6) an der Außenseite der inneren Platte der Tür (2a) angefügt ist und mit einer Beschlagplatte (7) abgedeckt ist.

## Claims

1. A bodywork structure for an automobile vehicle (1) comprising a door (2) articulated on a bodywork pillar (5) and provided with an inner panel (2a) fitted with a protection reinforcement (6), this protection reinforcement (6) comprising an end coming opposite the pillar (5) when the door (2) is in the closed position, said pillar (5) being formed by the assembly of at least two welded metal sheets, **characterised in that** the pillar (5) comprises a weld rabbet (5a) opposite the inner panel (2a) of the door (2) at the location of a lateral wall (21) disposed between the protection reinforcement (6) and the outer panel (26) so that, in the event of a front impact of the vehicle, the edge of the rabbet (5a) strikes and deforms the lateral wall (21) and inhibits the lateral displacement of the door (2).

2. A bodywork structure as claimed in claim 1, **characterised in that** the rabbet (5a) connects the two metal sheets over the height of the pillar (5) to form a rear surface (5b) disposed substantially perpendicular to the axis of the vehicle, said rabbet (5a) projecting externally to the pillar (5) and perpendicularly to the rear surface (5b).

3. A bodywork structure as claimed in claim 2, **characterised in that** the pillar is a front hinge pillar (5) of an automobile vehicle which also bears a dashboard (10), the dashboard (10) being provided with fastening lugs secured on the rear surface (5b) of the front hinge pillar (5) by means of fastening members (9) disposed along the axis of the protection reinforcement (6) when the front door (2) is in the closed position, the weld rabbet (5a) being offset laterally towards the exterior of the vehicle with respect to the end of the fastening lugs.

4. A bodywork structure as claimed in claim 3, **characterised in that** the rear surface (5b) comprises tapped holes adapted to receive the fastening screws (9) of the dashboard (10).

5. A bodywork structure as claimed in any one of claims 1 to 4, **characterised in that** the pillar (5) possesses a cross-section substantially of trapezoidal shape formed by the welding of two drawn metal sheets, the pillar comprising a first weld rabbet (5a) in the vicinity of the intersection of the rear surface (5b) and the outer lateral surface of the pillar and a second rabbet in the vicinity of the intersection of the front surface and the inner lateral surface of the pillar.

6. A bodywork structure as claimed in any one of claims 1 to 5, **characterised in that** the rabbet (5a) bears a sealing gasket (8) for bearing laterally against the inner panel (21) of the door (2).

7. A bodywork structure as claimed in any one of claims 1 to 6, **characterised in that** the protection reinforcement (6) is secured to the interior of the inner panel (2a) of the door (2).

8. A bodywork structure as claimed in any one of claims 1 to 6, **characterised in that** the protection reinforcement (6) is added to the exterior of the inner panel of the door (2a) is covered by a covering panel (7).
